# EUROPEAN PATENT APPLICATION

(11) **EP 1 890 179 A1**
(43) Date of publication of application: **20.02.2008**
(21) Application number: 07013527.2
(22) Date of filing: 10.07.2007
(51) Int. Cl.: G02B 21/20

(54) **Microscope lens barrel**

(30) Priority: 17.08.2006 JP 2006222227
(71) Applicant: Olympus Corporation, Tokyo 151-0072 (JP)
(72) Inventor: Masayoshi, Karasawa intellect. Prop. Support. Dpt, Tokyo 192-8512 (JP); Chikara Kuroda intellect. Prop. Support. Dpt, Tokyo 192-8512 (JP)
(74) Representative: von Hellfeld, Axel

(57) **Abstract**

A microscope lens barrel includes a lens barrel section in which a fixed tube (2) is fixed to a lens barrel body (1), one of two holding tubes (7, 8) arranged parallel to and equidistant from a center axis of the fixed tube is provided to be movable without changing a distance from the center axis, and an optical system is placed to maintain directions of optical axes so that two optical paths split by transmitting and reflecting an incident optical path are always aligned with center axes of the holding tubes, and a reticle anti-rotation unit (20, 30) in which a reticle plate is placed so that a plane on which a reticle is provided is perpendicular to the center axis of the movable holding tube and which is removably mounted to the fixed tube and the movable holding tube in a state where a holding mechanism holding a direction of the reticle plate on the center axis to the microscope body is integrated.

## Description

### BACKGROUND OF THE INVENTION

### 1. Field of the Invention

This invention relates to a microscope lens barrel which is constructed as a binocular lens barrel and has a Siedentoph-type interpupillary adjustment mechanism.

### 2. Description of Related Art

A microscope lens barrel is attached to a microscope body having a stage on which a specimen is placed as an observation object so that observation light incident from an objective lens provided in the microscope body is rendered incident on an eyepiece retained by the lens barrel itself and is imaged at the human eye through the eyepiece. Microscope lens barrels are available in binocular lens barrels in which an optical path incident from the objective lens is split into two paths by an optical system and these split optical paths are rendered incident on individual eyepieces so that the same image can be observed with both eyes. The microscope lens barrel constructed as the binocular lens barrel has an interpupillary adjustment mechanism adjusting a mutual distance between the eyepieces in agreement with a distance between both eyes of a user (an interpupillary distance). Some of the interpupillary adjustment mechanisms are of Siedentoph types. The Siedentoph-type interpupillary adjustment mechanism is such that split optical paths are always aligned with optical axes of two eyepieces by holding the direction of the optical axis of the optical system, and at the same time, holding tubes retaining the eyepieces are revolved and moved without changing a distance from the same center.

The microscope lens barrel, on the other hand, may have a reticle plate of glass on which lines, called a reticle such as a cross hair or rectangle, are etched, fixed at the position of an image plane of the eyepieces. The reticle is observed; together with the observation object, in the visual field through the eyepieces and is used for the confirmation of an observation area or for centering of the observation object. However, when the distance between the eyepieces is adjusted by the Siedentoph-type interpupillary adjustment mechanism, the direction of the reticle is changed with respect to the observation object in the visual field through the eyepieces. Hence, for example, when a silver-halide film camera is used to photograph the observation object, a photographing area is confirmed by the reticle through the eyepieces, but it becomes difficult to confirm the photographing area of the camera because the direction of the reticle is changed with respect to the observation object.

Thus, a conventional microscope lens barrel that is constructed as the binocular lens barrel and uses the Siedentoph-type interpupillary adjustment mechanism may be provided with a reticle anti-rotation mechanism. In this reticle anti-rotation mechanism, each eyepiece is retained by the holding tube so that the eyepiece can be rotated around its own optical axis. A rotatable supporting body placed on the eyepiece side at a preset distance from the center of rotation of the eyepiece is connected by a lever with a fixed rotatable supporting body placed at the preset distance from the center of the revolving movement of the eyepiece. This constitutes a parallel link connecting individual rotatable supporting bodies, the center of the revolving movement of the eyepiece, and the center of the rotation of the eyepiece. By this structure, when the interpupillary adjustment of the eyepieces is made by the interpupillary adjustment mechanism, the direction of the reticle relating to the observation object is kept constant in the visual field through the eyepieces (refer to, for example, Japanese Utility Model Kokai No. Sho 60-36618).

In another conventional reticle anti-rotation mechanism, each eyepiece is retained so that it can be rotated around its own optical axis. In addition, a fixed shaft fixed at the center of the revolving movement of the eyepiece is connected by a belt with the periphery of the eyepiece of the same diameter as the fixed shaft, and the belt is fixed to the fixed shaft and the periphery of the eyepiece. By this structure, when the interpupillary adjustment of the eyepieces is made by the interpupillary adjustment mechanism, the direction of the reticle relating to the observation object is kept constant in the visual field through each eyepiece (refer to, for example, Japanese Utility Model Kokai No. Sho 54-114948).

In recent years, digital cameras, instead of silver-halide film cameras, have been highly popularized. In the digital camera, its photographing area can be observed through a monitor. When the photographing area is confirmed through the monitor, the reticle anti-rotation mechanism becomes unnecessary because the photographing area is not confirmed by the reticle. When the reticle anti-rotation mechanism is unnecessary in this way, the reticle anti-rotation mechanism functions in association with the movement of the eyepieces in the interpupillary adjustment and this leads to a load of the revolving movement of the eyepieces. Thus, there is the demand that the reticle anti-rotation mechanism should be removed. The conventional microscope lens barrel, however, is constructed so that the reticle anti-rotation mechanism is previously incorporated in the microscope lens barrel, and therefore, in order to remove the reticle anti-rotation mechanism, the microscope lens barrel must be disassembled. As such, the reticle anti-rotation mechanism cannot be easily removed. When the microscope lens barrel is disassembled in order to remove the reticle anti-rotation mechanism, the adjustment of the optical system is involved.

The reticle and the reticle anti-rotation mechanism are necessary for polarization observation in addition to the case where the silver-halide film camera is used to photograph the observation object. A polarizer used in the polarization observation is rotatably placed on the optical path from a light source below the stage of the microscope body, and it is necessary that when a scale provided in the polarizer itself is 0°, the direction of vibration of the wave of light passing through the polarizer is initialized to a preset direction. Usually, the reticle in the visual field through the eyepiece is made to coincide with a horizontal direction of the microscope body and thereby the direction of vibration of the polarizer is initialized. Since, in the absence of the reticle anti-rotation mechanism in the polarization observation, the direction of the reticle relative to the stage for placing the observation object is changed by the interpupillary adjustment, the angle of the initialized polarizer is altered and the reference of the direction of vibration of the polarizer ceases to be taken. However, when the reticle anti-rotation mechanism becomes unnecessary as mentioned above and thereby the microscope lens barrel has been disassembled to remove the reticle anti-rotation mechanism, the microscope lens barrel must be disassembled again in order to return the reticle anti-rotation mechanism to a original condition, and hence the reticle anti-rotation mechanism cannot be easily mounted. Moreover, when the microscope lens barrel is disassembled in order to mount the reticle anti-rotation mechanism, the adjustment of the optical system is involved.

### SUMMARY OF THE INVENTION

It is, therefore, an object of the present invention to provide a microscope lens barrel in which the reticle anti-rotation mechanism can easily be mounted and dismounted, and the situation attended with the adjustment of the optical system can be obviated.

In order to solve the above problems and achieve the above object, the microscope lens barrel according to a first aspect of the present invention comprises a lens barrel section in which a fixed tube is fixed to a lens barrel body, at least one of two holding tubes arranged parallel to and equidistant from a center axis of the fixed tube is provided to be movable without changing a distance from the center axis, and an optical system is placed to maintain directions of optical axes so that two optical paths split by transmitting and reflecting an optical path rendered incident in alignment with the center axis of the fixed tube are always aligned with center axes of the holding tubes, and a reticle anti-rotation unit in which a reticle plate is placed on the center axis of the movable holding tube so that a plane on which a reticle is provided is perpendicular to the center axis and which is removably mounted to the fixed tube and the movable holding tube in a state where a holding mechanism holding a direction of the reticle plate on the center axis to the microscope body is integrated when the holding tube is moved.

The microscope lens barrel according to a second aspect of the present invention, in the first aspect, is constructed so that the reticle anti-rotation unit has a first axis provided to the fixed tube and fixed, parallel to the center axis of the fixed tube and at a preset distance therefrom; a rotary member placed on the movable holding tube so as to rotate around the center axis of the movable holding tube while retaining the reticle plate; a second axis provided to the rotary member and placed parallel to the center axis of the movable holding tube and at a preset distance therefrom; and a lever-like connecting member connecting the first axis with the second axis to constitute a parallel link connecting the first axis, the second axis, the center axis of the fixed tube, and the center axis of the movable holding tube.

The microscope lens barrel according to a third aspect of the present invention, in the first aspect, is constructed so that the reticle anti-rotation unit has a first peripheral wall portion fixed to the fixed tube along a circle of a preset radius with the center axis of the fixed tube as a center; a rotary member placed on the movable holding tube so as to rotate around the center axis of the movable holding tube while retaining the reticle plate; a second peripheral wall portion provided on the rotary member and placed along the circle of the preset radius with the center axis of the movable holding tube as a center; and a connecting member connecting the first peripheral wall portion with the second peripheral wall portion.

The microscope lens barrel according to a fourth aspect of the present invention, in the first aspect, is constructed so that the reticle anti-rotation unit has a first peripheral wall portion fixed to the fixed tube along a circle of a preset radius with the center axis of the fixed tube as a center; a rotary member provided to be movable along a plane perpendicular to the center axis of the movable holding tube while retaining the reticle plate and removably mounted to a mounting portion placed in the movable holding tube so as to rotate around the center axis of the movable holding tube; a second peripheral wall portion provided on the rotary member and placed along the circle of the preset radius with the center axis of the movable holding tube as a center; an endless connecting member wound around the first peripheral wall portion and the second peripheral wall portion; and a tension imparting means imparting a tension to the connecting member.

The microscope lens barrel according to a fifth aspect of the present invention, in any one of the second to fourth aspects, is constructed so that the lens barrel section has a mounting portion placed to be rotatable around the center axis of the movable holding tube so that the rotary member is removably provided, and is provided with an adapter mounted to the mounting portion in a state where the reticle anti-rotation unit is removed, and retaining one eyepiece on the center axis of the movable holding tube, thereby adjusting the position of one eyepiece in an axial direction with respect to the position, in the axial direction, of a remaining eyepiece retained on the optical axis of a remaining optical path being split.

The microscope lens barrel according to the present invention, as mentioned above, is provided with the reticle anti-rotation unit removably mounted to the fixed tube and the movable holding tube in a state where the holding mechanism is integrated, and thereby the reticle anti-rotation mechanism can easily be mounted to and dismounted from the lens barrel section. Furthermore, since the reticle anti-rotation unit is constructed so that the holding mechanism is integrated, the situation attended with the adjustment of the optical system in mounting and dismounting the reticle anti-rotation unit can be obviated.

These and other features and advantages of the present invention will become apparent from the following detailed description of the preferred embodiments when taken in conjunction with the accompanying drawings.

### BRIEF DESCRIPTION OF THE DRAWINGS

Fig. 1 is a perspective view showing the microscope lens barrel according to the present invention;
Fig. 2 is a sectional view showing schematically the microscope lens barrel of Fig. 1;
Fig. 3 is a perspective view showing the microscope lens barrel in a state where eyepieces are removed;
Fig. 4 is a perspective view showing the microscope lens barrel in a state where eyepieces and an adapter are removed;
Fig. 5 is a sectional view showing schematically the microscope lens barrel of Fig. 4;
Fig. 6 is a perspective view showing a reticle anti-rotation unit according to the present invention, viewed from the front side;
Fig. 7 is a perspective view showing the reticle anti-rotation unit according to the present invention, viewed from the back side;
Fig. 8 is a perspective view showing the reticle anti-rotation unit according to the present invention, viewed from the upper side;
Fig. 9 is a perspective view showing a state where the reticle anti-rotation unit is mounted to the microscope lens barrel according to the present invention;
Fig. 10 is a sectional view showing schematically the microscope lens barrel of Fig. 9;
Fig. 11 is a perspective view showing a state where the eyepieces are mounted to the microscope lens barrel of Fig. 9;
Fig. 12 is a view showing the microscope lens barrel of Fig. 9, viewed from an axial direction;
Fig. 13 is a perspective view showing the reticle anti-rotation unit, viewed from the front side, in another embodiment according to the present invention;
Fig. 14 is a perspective view showing the reticle anti-rotation unit of Fig. 13, viewed from the front side;
Fig. 15 is a perspective view showing a state where the reticle anti-rotation unit of Fig. 13 is mounted to the lens barrel body; and
Fig. 16 is a view showing the microscope lens barrel of Fig. 15, viewed from an axial direction.

### DETAILED DESCRIPTION OF THE PREFERRED EMBODIMENTS

With reference to the attached drawings, the preferred embodiments of the present invention will be explained in detail below. Also, the present invention is not limited to the embodiments.

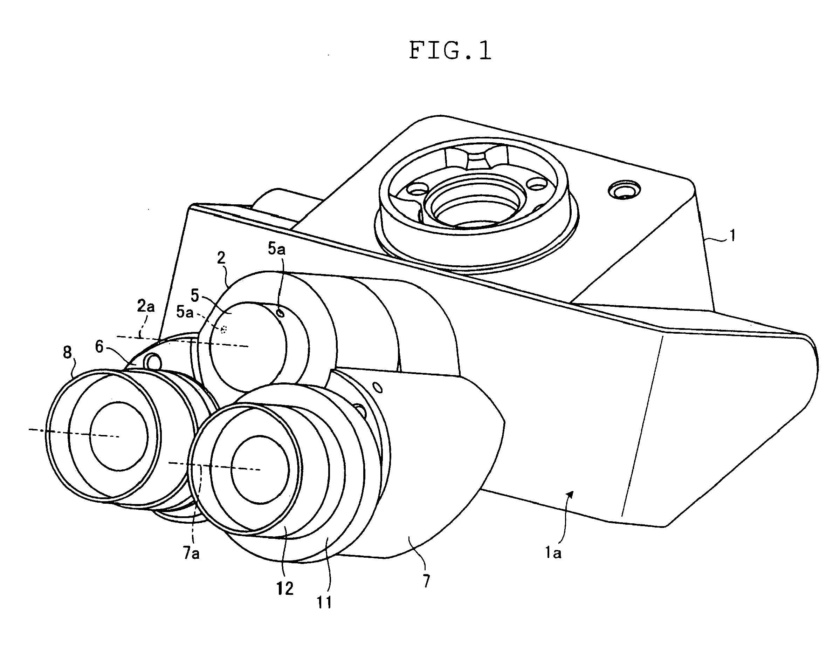

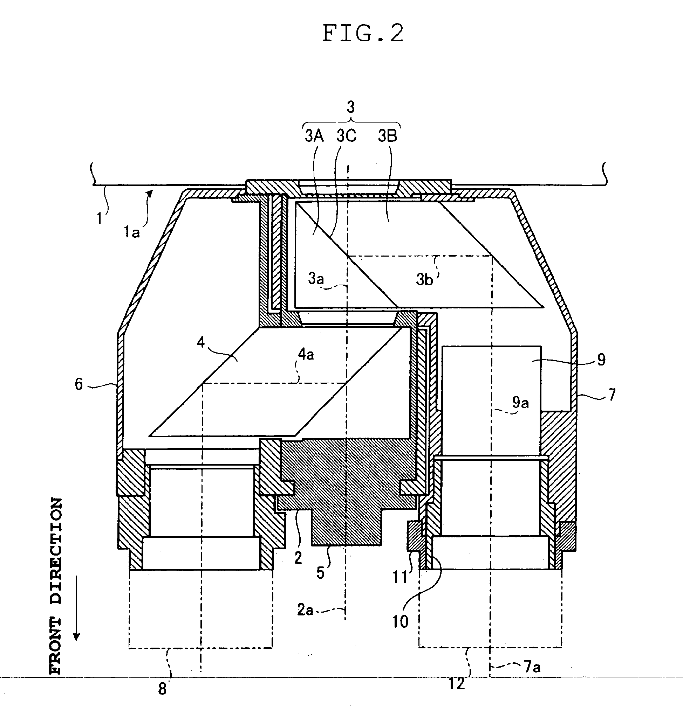

Fig. 1 is a perspective view showing the microscope lens barrel according to the present invention, and Fig. 2 is a sectional view showing schematically the microscope lens barrel of Fig. 1. The microscope lens barrel in this embodiment is attached to the microscope body having a stage for placing a specimen as an observation object and is constructed as a binocular lens barrel in which observation light incident from an objective lens provided in the microscope body is divided into two paths by the optical system and divided observation light is rendered incident on two eyepieces so that the same image can be observed with both eyes. It further has a Siedentoph-type interpupillary adjustment mechanism constructed so that an interpupillary distance which is a distance between both eyes can be adjusted.

The microscope lens barrel, as shown in Figs. 1-3, has a lens barrel body 1 configured into a box-like shape. The lens barrel body I is attached to the microscope body (not shown), and a fixed tube 2 constituting the lens barrel section is fixed to its front 1a. The fixed tube 2 is configured with a column sleeve in which one end is opened and the other is closed so that this one end is fixed to the front 1a of the lens barrel body 1 and the other is extended from the front 1a of the lens barrel body 1.

On the one end side of the interior of the fixed tube 2, a divided prism 3 is placed. The divided prism 3 is constructed by cementing a rectangular prism 3A and a parallel prism 3B through a semi-transmissive film 3C and is adapted to split the optical path of the observation light incident from the objective lens (not shown) at the ratio of 50 : 50. The divided prism 3, as illustrated in Fig. 2, has a first optical axis 3a transmitted, along a front direction, though the semi-transmissive film 3C set at an angle of inclination of 45° with respect to the front direction and a second optical axis 3b reflected normal to the first optical axis 3a (in the right direction in Fig. 2) by the semi-transmissive film 3C and, at the same time, reflected in the front direction, parallel with the first optical axis 3a, by the parallel prism 3B. On the other end side of the interior of the fixed tube 2, a parallel prism 4 is placed. The parallel prism 4 has an optical axis 4a reflected normal to the front direction (in the left direction in Fig. 2) in alignment with the first optical axis 3a and, at the same time, reflected in the front direction, parallel with the first optical axis 3a. The divided prism 3 and the parallel prism 4 constitutes an optical system in which the second optical axis 3b of the divided prism 3 (the parallel prism 3B) reflected in the right-side front direction and the optical axis 4a of the parallel prism 4 reflected in the left-side front direction are situated parallel to and equidistant from the first optical axis 3a.

At the other end of the fixed tube 2, a fixed section 5 is provided. The fixed tube 5 is configured into a column shape projecting in the front direction from the other end of the fixed tube 2 and is provided to the fixed tube 2 in such a way that a fixed center axis 2a of the fixed tube 2 that is the center of the column shape is aligned with the first optical axis 3a. In the peripheral surface of the fixed tube 5, screw holes 5a are provided.

Two holding tubes 6 and 7 constituting the lens barrel section are attached to the fixed tube 2. The holding tubes 6 and 7 are adapted to retain eyepieces 8 and 12, respectively, and are arranged on the left and right sides of the fixed tube 2 so that each of them is configured into a cylindrical shape extending in the front direction.

The parallel prism 4 is fixed inside a holding tube 6 on the left side in Fig. 2. At the top of the holding tube 6 in the front direction, the eyepiece 8 is removably retained. The eyepiece 8 is retained by the holding tube 6 so that its optical axis is aligned with the optical axis 4a of the parallel prism 4 reflected in the left-side front direction.

The holding tube 6 is provided to be movable, together with the parallel prism 4 and the eyepiece 8, in respect of the fixed tube 2, with the first optical system 3a of the divided prism 3 as a center and with a distance between the optical axis 4a of the parallel prism 4 reflected in the left-side front direction and the first optical axis 3a as a radius. Specifically, the holding tube 6 is moved in a state where the direction of the optical axis of the optical system with which the optical axes of the divided prism 3, the parallel prism 4, and the eyepiece 8 are aligned is maintained.

The divided prism 3 is fixed inside a holding tube 7 on the right side in Fig. 2. In the interior of the holding tube 7, an optical path compensating lens 9 is provided so that its optical axis 9a is aligned with the second optical axis 3b of the divided prism 3 (the parallel prism 3B) reflected in the right-side front direction. The optical path compensating lens 9 is adapted to equalize holding-tube-6-side and holding-tube-7-side optical path lengths (optical distances) with each other.

A mounting portion 10 is provided at the top of the holding tube 7 in the front direction. The mounting portion 10 is configured into a cylindrical shape extending in the front direction and is provided in the holding tube 7 so that a rotating center axis 7a of the holding tube 7 that is the center of the cylindrical shape is aligned with the second optical axis 3b and the optical axis 9a. Moreover, the mounting portion 10 is provided to be rotatable around the rotating center axis 7a with respect to the holding tube 7. Through the peripheral surface of the mounting portion 10, a screw hole 10a is provided. By setting a screw (not shown) into the screw hole 10a from the outside, an adapter 11 and the eyepiece 12 are mounted to the mounting portion 10. The adapter 11, as shown in Figs. 1-5, is removably mounted to the mounting portion 10 so as to cover the periphery of the mounting portion 10. In a state where the adapter 11 is mounted to the mounting portion 10, the top position of the mounting portion 10 in the front direction is determined by the end face of the adapter 11 in the front direction. The eyepiece 12 is retained by the mounting portion 10 so that the optical axis of the eyepiece 12 is aligned with the second optical axis 3b of the divided prism 3 (the parallel prism 3B) reflected in the right-side front direction and the optical axis 9a of the optical path compensating lens 9. The eyepiece 12, as shown in Figs. 1 and 2, is retained and mounted to the mounting portion 10 in a state where the mounting position in the front direction (the direction of the optical axis) is determined by the end face of the adapter 11 in the front direction. The mounting position of the eyepiece 12 coincides with that of the eyepiece 8, in the front direction (the direction of the optical axis), mounted to the holding tube 6. In this way, the adapter 11 is interposed between the mounting portion 10 and the eyepiece 12 and is adapted to make the mounting position of the eyepiece 12 in the front direction (the direction of the optical axis) coincide with that of the eyepiece 8.

The holding tube 7 is provided to be movable, together with the divided prism 3, the optical path compensating lens 9, and the eyepiece 12, with the first optical axis 3a of the divided prism 3 as a center and with a distance between the second optical path 3b reflected in the right-side front direction and the first optical axis 3a as a radius. Specifically, the holding tube 7 is moved in a state where the direction of the optical axis of the optical system with which the optical axes of the divided prism 3, the optical path compensating lens 9, and the eyepiece 12 are aligned is maintained.

The microscope lens barrel, as mentioned above, is constructed as the binocular lens barrel in which the optical path of the observation light incident from the objective lens (not shown) through an aperture provided at one end of the fixed tube 2 is split into two paths parallel to and equidistant from the optical path by the divided prism 3, the parallel prism 4, and optical path compensating lens 9 and which has the optical system rendering these split optical paths incident on the eyepieces 8 and 12 retained by the holding tubes 6 and 7, respectively, with the same optical path length. Furthermore, the microscope lens barrel has the Siedentoph-type interpupillary adjustment mechanism in which the holding tubes 6 and 7 are revolved and moved without changing the distance from the fixed center axis 2a while maintaining the direction of the optical axis of the optical system, and thereby the split optical paths are revolved and moved, with the optical axis of the optical path of the observation light as a center, to adjust a mutual distance between the eyepieces 8 and 12.

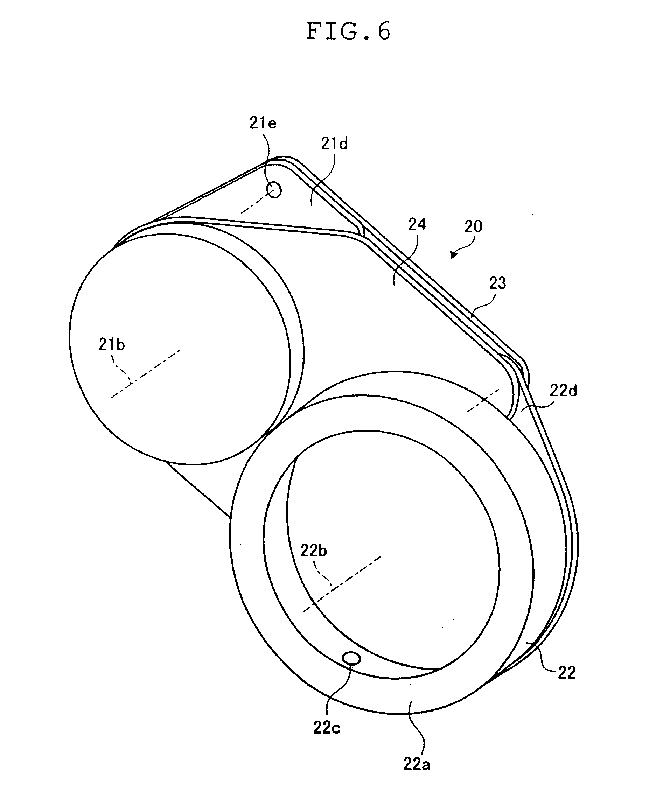

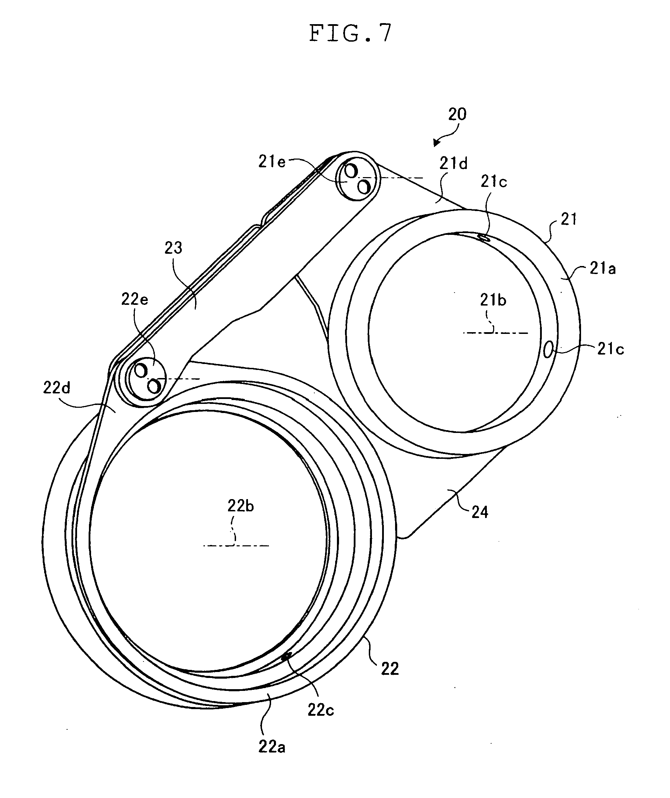

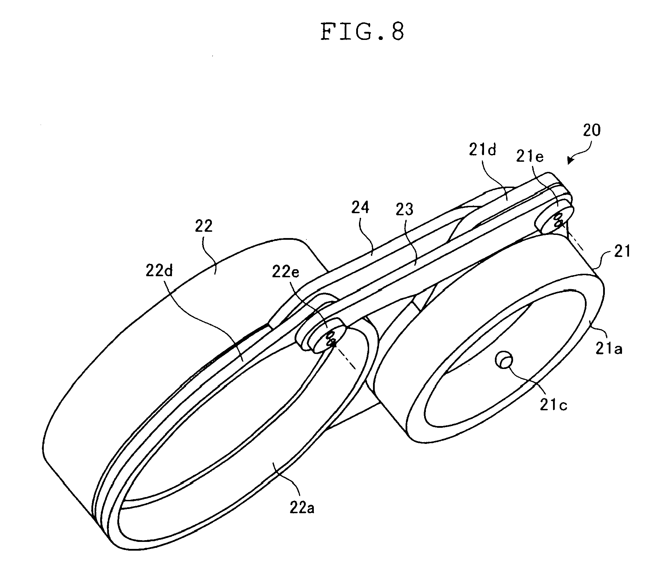

In the microscope lens barrel constructed as mentioned above, the reticle anti-rotation unit according to the present invention is removably mounted. Fig. 6 is a perspective view showing a reticle anti-rotation unit according to the present invention, viewed from the front side, Fig. 7 is a perspective view showing the reticle anti-rotation unit according to the present invention, viewed from the back side, and Fig. 8 is a perspective view showing the reticle anti-rotation unit according to the present invention, viewed from the upper side.

As illustrated in Figs. 6-8, a reticle anti-rotation unit 20 has a fixed member 21, a rotary member 22, and a connecting member 23 as an integrated retaining mechanism.

The fixed member 21 is removably fixed to the fixed section 5 of the microscope lens barrel. The fixed member 21 has an annular portion 21a into which the periphery of the columnar fixed section 5 is fitted. The fixed portion 5 is fitted into the annular portion 21a and thereby a center axis 21 b of the annular portion 21 a is aligned with the fixed center axis 2a of the fixed tube 2. The peripheral wall of the annular portion 21a is provided with through holes 21c which coincide with the screw holes 5a of the fixed section 5 and in which screws (not shown) to be engaged with the screw holes 5a are inserted. Specifically, the fixed member 21 is fixed to the fixed section 5 by engaging the screws inserted in the through holes 21c with the screw holes 5a. On the other hand, by removing the screws, it becomes possible to dismount the fixed member 21 from the fixed section 5. The fixed member 21 further has a flange 21d extending in a radial direction of the annular portion 21a. The flange 21d is mounted with a mounting pin 21e constituting a first shank provided parallel to the center axis 21b and at a preset distance therefrom.

The rotary member 22 is removably mounted to the mounting portion 10 of the microscope lens barrel. The rotary member 22 has an annular portion 22a into which the periphery of the cylindrical mounting portion 10 is fitted. The mounting portion 10 is fitted into the annular portion 22a and thereby a center axis 22b of the annular portion 22a is aligned with the rotating center axis 7a of the holding tube 7. The peripheral wall of the annular portion 22a is provided with a through hole 22c which coincides with the screw hole 10a of the mounting portion 10 and in which a screw (not shown) engaged with the screw hole 10a is inserted. Specifically, the rotary member 22 is fixed to the mounting portion 10 by engaging the screw inserted in the through hole 22c with the screw hole 10a. The rotary member 22 fixed to the mounting portion 10 can be rotated together with the mounting portion 10, with the rotating center axis 7a (and the center axis 22b) as a center. The rotary member 22 can be dismounted from the mounting portion 10 by removing the screw. The rotary member 22 further has a flange 22d extending in a radial direction of the annular portion 22a. The flange 22d is mounted with a mounting pin 22e constituting a second shank provided parallel to the center axis 22b and at a preset distance therefrom.

The connecting member 23 is adapted to connect the fixed member 21 with the rotary member 22. The connecting member 23 is configured like a lever so that its one end is rotatably mounted to the fixed member 21 through the mounting pin 21e (the first shank) and the other is rotatably mounted to the rotary member 22 through the mounting pin 22e (the second shank). In this connecting member 23, the fixed member 21 and the rotary member 22 are connected so that a distance between the first shank and the second shank becomes equal to that between the fixed center axis 2a and rotating center axis 7a in accordance with the length of the lever.

The reticle anti-rotation unit 20 has a cover member 24 covering the front side of the annular portion 21a of the fixed member 21 and the front side of the connecting member 23. This cover member 24 is independent of the rotary member 22 and is constructed so that the mounting pin 22e does not pass through the member 24.

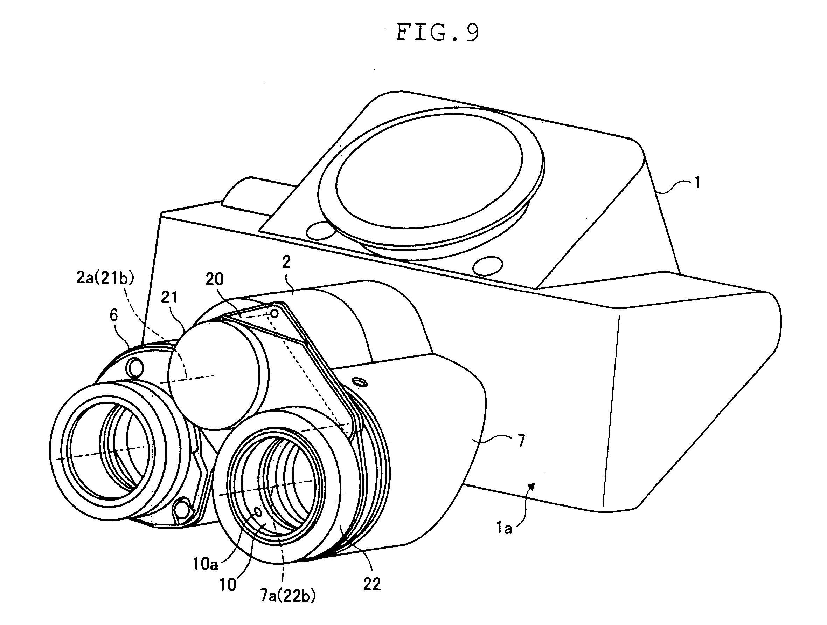

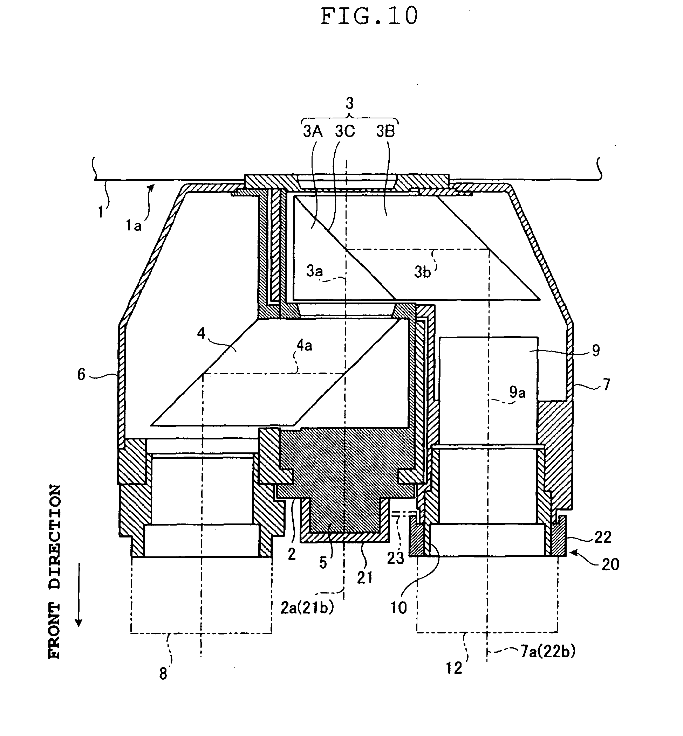

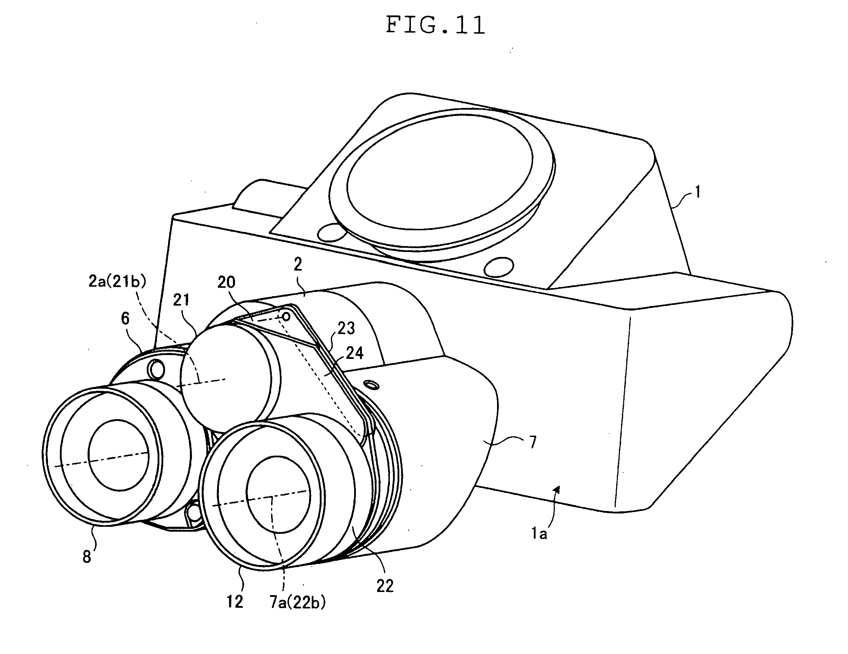

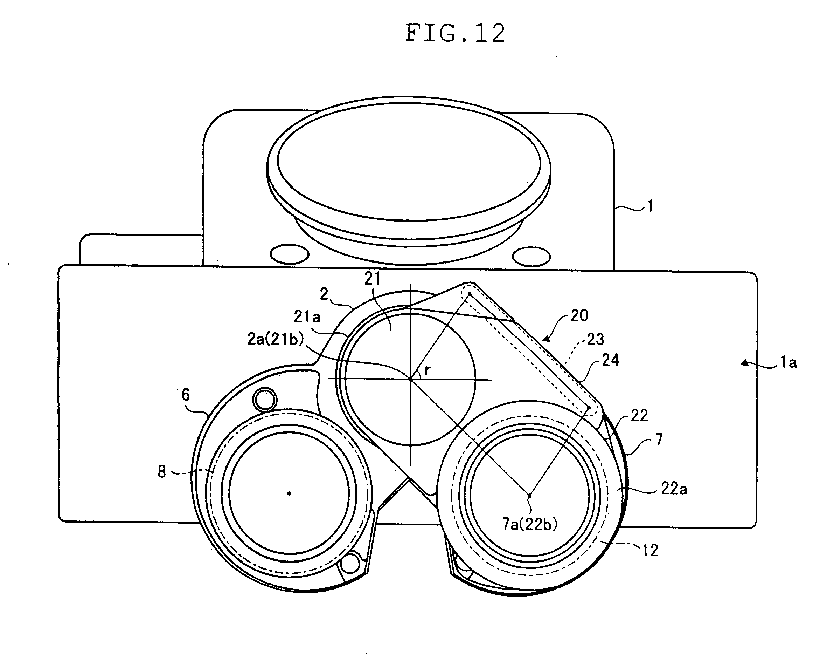

Reference will be made to the procedure for mounting the reticle anti-rotation unit 20 mentioned above to the lens barrel body 1. Fig. 9 is a perspective view showing a state where the reticle anti-rotation unit is mounted to the microscope lens barrel according to the present invention; Fig. 10 is a sectional view showing schematically the microscope lens barrel of Fig. 9; Fig. 11 is a perspective view showing a state where the eyepieces are mounted to the microscope lens barrel of Fig. 9; and Fig. 12 is a view showing the microscope lens barrel of Fig. 9, viewed from an axial direction.

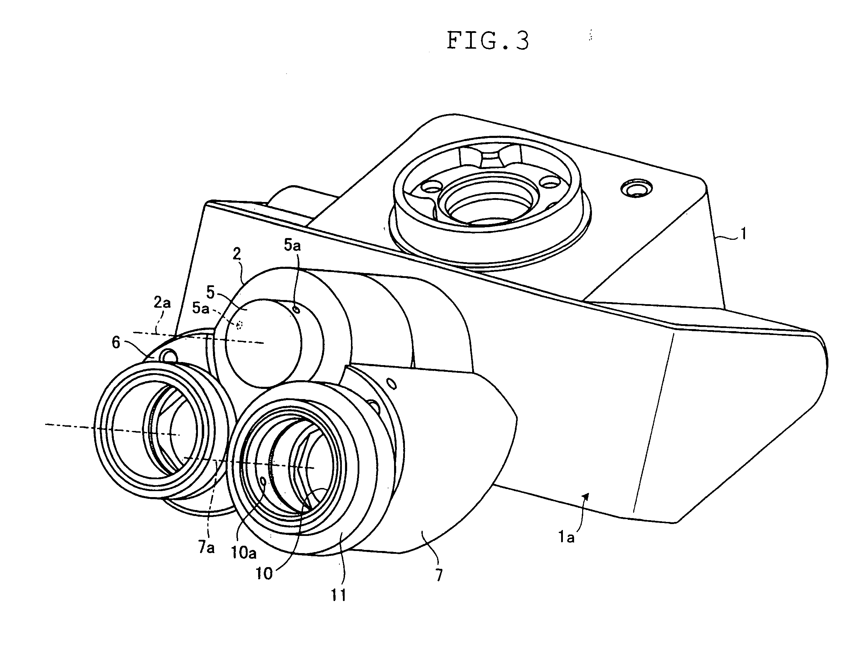

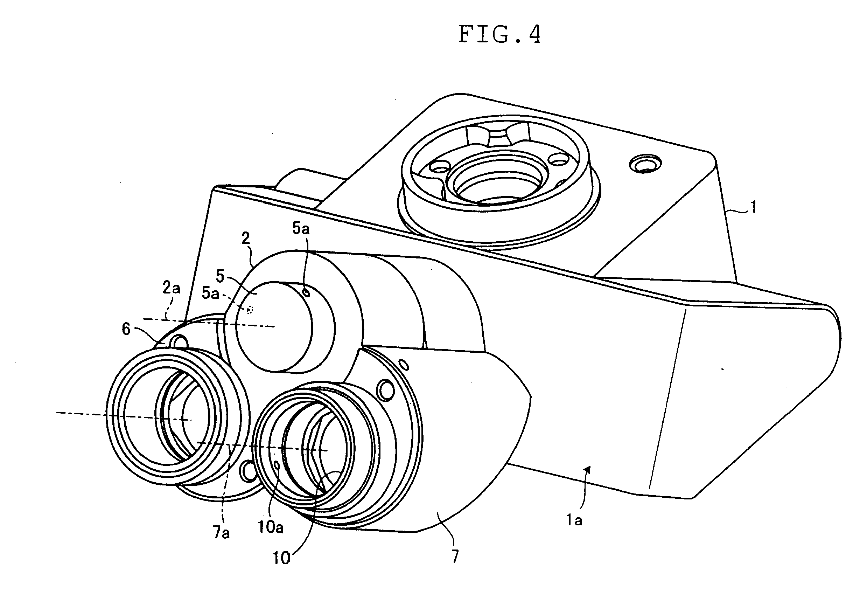

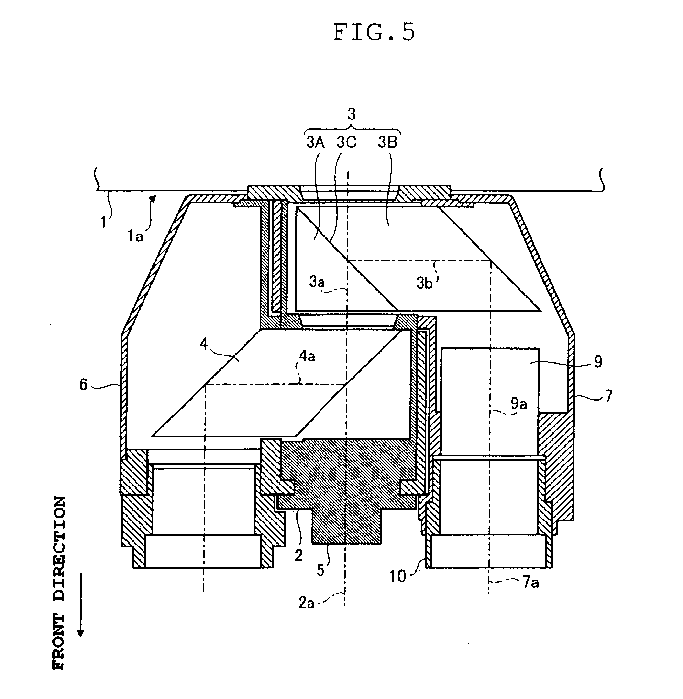

First of all, the holding tubes 6 and 7 are moved, with the fixed center axis 2a as a center, so that the holding tubes 6 and 7 are located closest to each other. Next, the screw is removed from the screw hole 10a of the mounting portion 10 and thereby the eyepiece 12 is dismounted from the holding tube 7 to bring about a state of Fig. 3. Further, the adapter 11 is dismounted from the holding tube 7 to bring about a state of Figs. 4 and 5. In this case, the eyepiece 8 may also be dismounted from the holding tube 6.

Subsequently, as shown in Figs. 9 and 10, the fixed section 5 of the fixed tube 2 is fitted into the annular portion 21 a of the fixed member 21 in the reticle anti-rotation unit 20 so that the screws inserted in the through holes 21c are engaged with the screw holes 5a of the fixed section 5 to thereby fix the fixed member 21 to the fixed tube 2. In addition, the mounting portion 10 of the holding tube 7 is fitted into the annular portion 22a of the rotary member 22 in the reticle anti-rotation unit 20 and the screw inserted in the through hole 22c is engaged with the screw hole 10a of the mounting portion 10 to thereby mount the rotary member 22 to the holding tube 7. At this time, the screw is not completely tightened with respect to the screw hole 10a so that the rotary member 22 is temporarily set. After that, a reticle plate (not shown) consisting of a glass plate on which the reticle is etched is mounted to the eyepiece 12. The reticle plate is placed on the optical axis of the eyepiece 12 so as to be normal to the optical axis. The eyepiece 12, as shown in Fig. 11, is inserted in the mounting portion 10.

Here, although not shown in figures, an oriented crystal plate of a crystal sample in which an optic axis is parallel to a reference plane is set on a stage with a rotary mechanism in the microscope body. Next, the stage is rotated and a scale for rotation of the stage is set at zero. Whereby, the reference plane of the oriented crystal plate becomes nearly horizontal in the visual field through the eyepieces 8 and 12. The eyepiece 12 is rotated with respect to the mounting portion 10 and the direction of the reticle is set parallel to the reference plane of the oriented crystal plate. Next, the screw engaged with the screw hole 10a is completely tightened to fix the eyepiece 12 to the mounting portion 10 and the annular portion 22a. After that, the oriented crystal plate is removed from the stage. Whereby, the direction of the reticle can be set with respect to the microscope body.

When the polarization observation is made, the oriented crystal plate, although not shown in figures, is set on the optical path from the light source, below the stage in the microscope body, and the scale is set at 0°. In addition, an analyzer is interposed between the objective lens in the microscope body and the lens barrel body 1 and is rotated so that the visual field becomes pitch-dark. Here, the reticle in the visual field through the eyepieces 8 and 12 is made to coincide with the horizontal direction of the microscope body as a reference to initialize the direction of vibration of a polarizer. After that, for example, the observation object, such as a crystal, is set on the stage, which is rotated, with the reticle as a reference, so that its crystal orientation is about 45°. In this case, a caution is needed because colors are changed (from yellow into blue) at crystal orientations of 45° and 135°. Next, the stage is rotated and fine-adjusted so that color set as the reference is obtained. Finally, data are obtained by reading the scale of the stage.

In the reticle anti-rotation unit 20 mounted to the microscope lens barrel, as mentioned above, the fixed member 21 is fixed to the fixed section 5 and thereby, as shown in Fig. 12, the center axis 21b of the annular portion 21a in the fixed member 21 is aligned with the fixed center axis 2a in the fixed tube 2. The rotary member 22 is mounted to the mounting portion 10 and thereby the center axis 22b of the annular portion 22a in the rotary member 22 is aligned with the rotating center axis 7a in the holding tube 7. As described above, the connecting member 23 connects the fixed member 21 with the rotary member 22 so that the distance between the mounting pin 21e (the first shank) located at the preset position from the center axis 21b (the fixed center axis 2a) and the mounting pin 22e (the second shank) located at the same preset position from the center axis 22b (the rotating center axis 7a) is equal to the distance between the center axis 21 b (the fixed center axis 2a) and the center axis 22b (the rotating center axis 7a). This constitutes the link of a parallelogram, as shown in Fig. 12, connecting the center axis 21 b (the fixed center axis 2a), the center axis 22b (the rotating center axis 7a), the second shank (22e), and the first shank (21 e) by a straight line on the same plane normal to individual axes and shanks. As a result, the microscope lens barrel mounting the reticle ant-rotation unit 20 is constructed so that the fixed member 21 and the rotary member 22 are brought into the relation of the parallelogram and connected by the connecting member 23 and the rotary member 22 is rotated together with the eyepiece 12, with the center axis 22b (the rotating center axis 7a) as a center. Thus, even when the holding tubes 6 and 7 are moved, with the fixed center axis 2a as a center, in order to adjust the interpupillary distance, the direction of the reticle can be kept constant with respect to the lens barrel body 1 in the visual field through the eyepieces 8 and 12.

Also, as described above, when the reticle anti-rotation unit 20 is mounted to the microscope lens barrel, the holding tubes 6 and 7 are moved so that they are located closest to each other. This reason is to obviate such a situation that when the reticle anti-rotation unit 20 is mounted in a state where an angle r of the link of the parallelogram is deviated 30° or more from a design value with respect to a horizontal line shown in Fig. 12, the link may cease to be operated.

The microscope lens barrel, as mentioned above, is provided with the reticle anti-rotation unit 20 removably mounted to the fixed tube 2 and the holding tube 7 in a state where the holding mechanism (including the fixed member 21, the rotary member 22, and the connecting member 23) is integrated, and thereby the mounting and dismounting of the reticle anti-rotation unit 20 to and from the lens barrel section can be facilitated. Moreover, since the reticle anti-rotation unit 20 is constructed so that the holding mechanism is integrated, the situation attended with the adjustment of the optical system in the mounting and dismounting of the reticle anti-rotation unit 20 can be obviated.

For a user who makes observation without using the reticle, it is only necessary to provide a microscope lens barrel to which the reticle anti-rotation unit 20 is not mounted. On the other hand, for a user who makes observation using the reticle, such as the polarization observation, it is only necessary to provide the microscope lens barrel to which the reticle anti-rotation unit 20 is mounted.

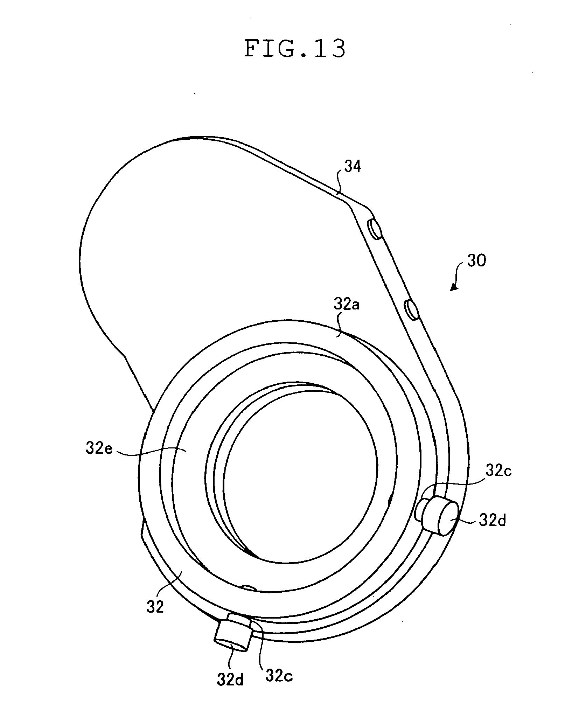

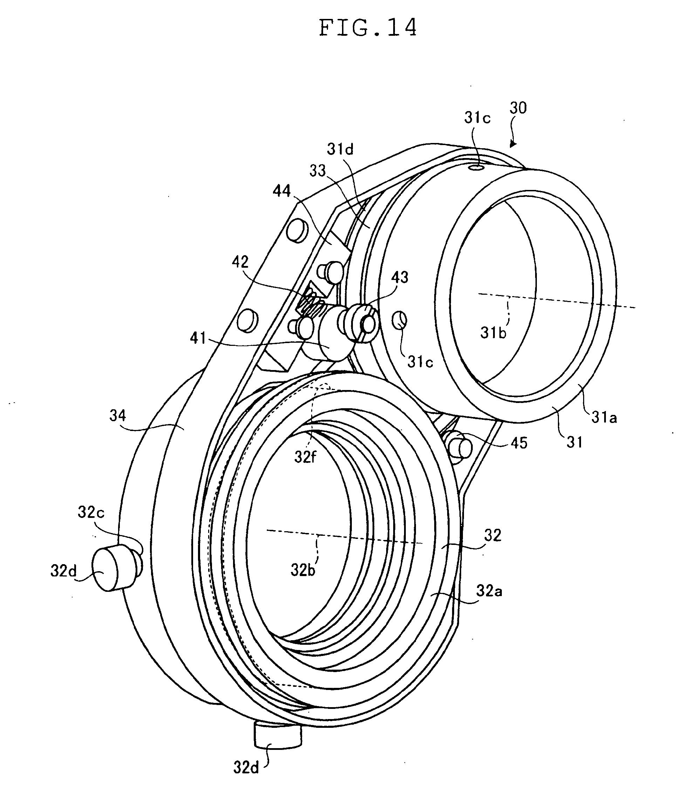

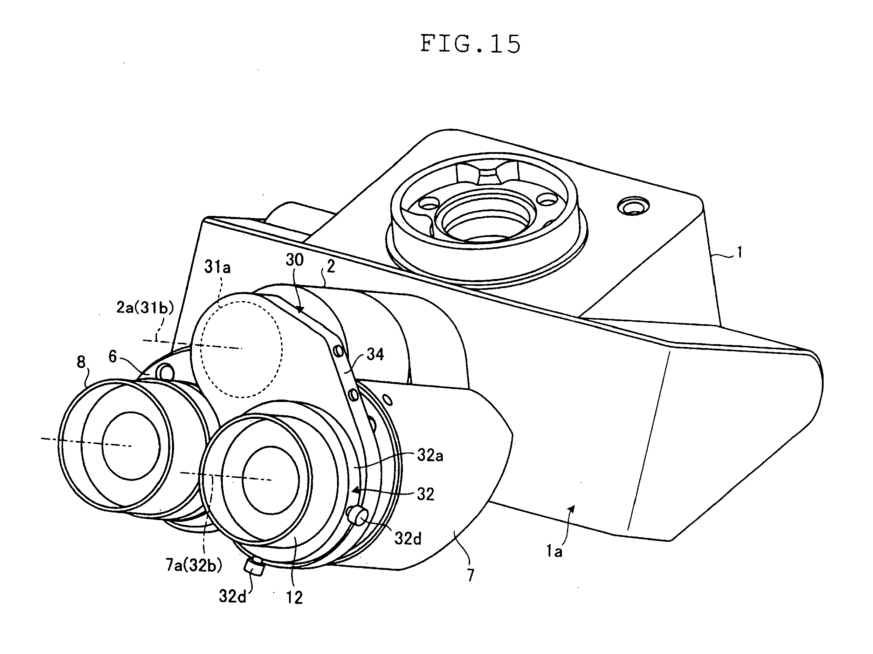

Another embodiment of the reticle anti-rotation unit will be described below. Fig. 13 is a perspective view showing the reticle anti-rotation unit, viewed from the front side, in another embodiment according to the present invention; Fig. 14 is a perspective view showing the reticle anti-rotation unit of Fig. 13, viewed from the front side; and Fig. 15 is a perspective view showing a state where the reticle anti-rotation unit of Fig. 13 is mounted to the lens barrel body.

As illustrated in Figs. 13 and 14, a reticle anti-rotation unit 30 has a fixed member 31, a rotary member 32, and a connecting member 33 as an integrated holding mechanism.

The fixed member 31 is removably fixed to the fixed section 5 of the microscope lens barrel. The fixed member 31 has an annular portion 31a into which the periphery of the columnar fixed section 5 is fitted. The fixed portion 5 is fitted into the annular portion 31a and thereby a center axis 31 b of the annular portion 31a is aligned with the fixed center axis 2a of the fixed tube 2. The peripheral wall of the annular portion 31a is provided with through holes 31c which coincide with the screw holes 5a of the fixed section 5 and in which screws (not shown) to be engaged with the screw holes 5a are inserted. Specifically, the fixed member 31 is fixed to the fixed section 5 by engaging the screws inserted in the through holes 31c with the screw holes 5a. On the other hand, by removing the screws, it becomes possible to dismount the fixed member 31 from the fixed section 5. The periphery of the fixed member 31 is provided with a first peripheral wall portion 31d having a peripheral wall along a circle of a preset radius, with the center axis 31b as a center. The fixed member 31 is fixed in a housing concavity of a case member 34 that is opened on the back side.

The rotary member 32 is removably mounted to the mounting portion 10 of the microscope lens barrel. The rotary member 32 has an annular portion 32a into which the periphery of the cylindrical mounting portion 10 is fitted. The mounting portion 10 is fitted into the annular portion 32a and thereby a center axis 32b of the annular portion 32a is aligned with the rotating center axis 7a of the holding tube 7. The annular portion 32a is provided to pass through the case member 34 and to project on its front side and back side and is supported so that it can be rotated on the center axis 32b, with respect to the case member 34. The peripheral wall of the annular portion 32a projecting on the front side of the case member 34 is provided with screw holes 32c. Screws 32d pass through the peripheral wall of the annular portion 32a and are engaged with the screw holes 32c. In addition, the inner surface of the annular portion 32a is provided with an abutment 32e on which the eyepiece 12 is made to abut. By engaging the screws 32d with the screw holes 32c while making the eyepiece 12 abut on the abutment 32e, the eyepiece 12 is fixed with the screws 32d projecting from the inner surface of the annular portion 32a. On the other hand, by loosening the screws 32d, the eyepiece 12 can be dismounted from the annular portion 32a. On the back side of the case member 34, the periphery of the rotary member 32 is provided with a second peripheral wall portion 32f having a peripheral wall along a circle of a preset radius, like the first peripheral wall portion 31d, with the center axis 32b as a center.

The connecting member 33 is adapted to connect the fixed member 31 with the rotary member 32. The connecting member 33, which is a metallic belt or wire made in an endless manner, is wound around the first peripheral wall portion 31d of the fixed member 31 and the second peripheral wall portion 32f of the rotary member 32 and is fixed to the peripheral wall portions 31d and 32f, for example, with screws.

Reference will be made to the procedure for mounting the reticle anti-rotation unit 30 mentioned above to the lens barrel body 1. First of all, the holding tubes 6 and 7 are moved, with the fixed center axis 2a as a center, so that the holding tubes 6 and 7 are located closest to each other. Next, the screw is removed from the screw hole 10a of the mounting portion 10 and thereby the eyepiece 12 is dismounted from the holding tube 7 to bring about a state of Fig. 3. Further, the adapter 11 is dismounted from the holding tube 7 to bring about a state of Figs. 4 and 5. In this case, the eyepiece 8 may also be dismounted from the holding tube 6.

Subsequently, as shown in Fig. 15, the fixed section 5 of the fixed tube 2 is fitted into the annular portion 31 a of the fixed member 31 in the reticle anti-rotation unit 30 so that the screws inserted in the through holes 31c are engaged with the screw holes 5a of the fixed section 5 to thereby fix the fixed member 31 to the fixed tube 2. In addition, the mounting portion 10 of the holding tube 7 is fitted into the annular portion 32a of the rotary member 32 in the reticle anti-rotation unit 30 to thereby mount the rotary member 32 to the holding tube 7. After that, a reticle plate (not shown) consisting of a glass plate on which the reticle is etched is mounted to the eyepiece 12. The reticle plate is placed on the optical axis of the eyepiece 12 so as to be normal to the optical axis. The eyepiece 12, as shown in Fig. 15, is inserted in the rotary member 32. In this case, the screws 32d are not completely tightened with respect to the screw holes 32c so that the eyepiece 12 is temporarily set.

Here, although not shown in figures, an oriented crystal plate of a crystal sample in which an optic axis is parallel to a reference plane is set on a stage with a rotary mechanism in the microscope body. Next, the stage is rotated and a scale for rotation of the stage is set at zero. Whereby, the reference plane of the oriented crystal plate becomes nearly horizontal in the visual field through the eyepieces 8 and 12. The eyepiece 12 is rotated with respect to the mounting portion 32 and the direction of the reticle is set parallel to the reference plane of the oriented crystal plate. Next, the screws 32d engaged with the screw holes 32c are completely tightened to fix the eyepiece 12 to the rotary member 32. After that, the oriented crystal plate is removed from the stage. Whereby, the direction of the reticle can be set with respect to the reference position.

When the polarization observation is made, the oriented crystal plate, although not shown in figures, is set on the optical path from the light source, below the stage in the microscope body, and the scale is set at 0°. In addition, an analyzer is interposed between the objective lens in the microscope body and the lens barrel body 1 and is rotated so that the visual field becomes pitch-dark. Here, the reticle in the visual field through the eyepieces 8 and 12 is made to coincide with the horizontal direction of the microscope body as a reference to initialize the direction of vibration of a polarizer. After that, for example, the observation object, such as a crystal, is set on the stage, which is rotated, with the reticle as a reference, so that its crystal orientation is about 45°. In this case, a caution is needed because colors are changed (from yellow into blue) at crystal orientations of 45° and 135°. Next, the stage is rotated and fine-adjusted so that color set as the reference is obtained. Finally, data are obtained by reading the scale of the stage.

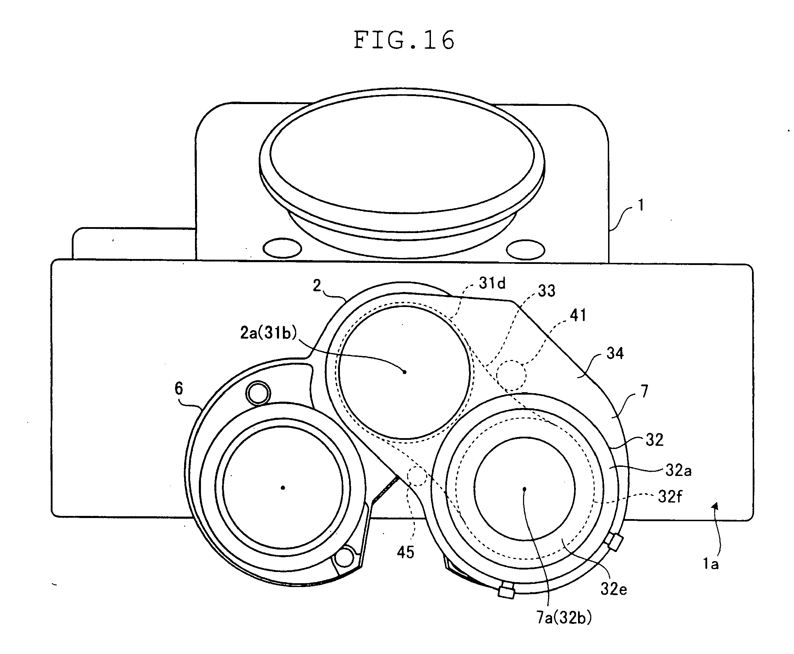

In the reticle anti-rotation unit 30 mounted to the microscope lens barrel as mentioned above, the fixed member 31 is fixed to the fixed section 5 and thereby, as shown in Fig. 16, the center axis 31 b of the annular portion 31 a in the fixed member 31 is aligned with the fixed center axis 2a in the fixed tube 2. The mounting portion 10 is fitted into the rotary member 32 and thereby the center axis 32b of the annular portion 32a in the rotary member 32 is aligned with the rotating center axis 7a of the holding tube 7. The connecting member 33 is wound around the first peripheral wall portion 31d of the fixed member 31 and the second peripheral wall portion 32f of the rotary member 32 and is fixed to the peripheral wall portions 31d and 32f. Hence, when the holding tube 7 is moved, with the fixed center axis 2a as a center, the rotary member 32 is moved together with the holding tube 7, with the center axis 32b (the rotating center axis 7a) as a center, and thereby the angles of rotations of the holding tube 7 and the rotary member 32 become equal to each other. As a result, in the microscope lens barrel mounted with the reticle ant-rotation unit 30, even when the holding tubes 6 and 7 are moved, with the fixed center axis 2a as a center, in order to adjust the interpupillary distance, the direction of the reticle can be kept constant with respect to the lens barrel body 1 in the visual field through the eyepieces 8 and 12.

The microscope lens barrel, as mentioned above, is provided with the reticle anti-rotation unit 30 removably mounted to the fixed tube 2 and the holding tube 7 in a state where the holding mechanism (including the fixed member 31, the rotary member 32, and the connecting member 33) is integrated, and thereby the mounting and dismounting of the reticle anti-rotation unit 30 to and from the lens barrel section can be facilitated. Moreover, since the reticle anti-rotation unit 30 is constructed so that the holding mechanism is integrated, the situation attended with the adjustment of the optical system in mounting and dismounting the reticle anti-rotation unit 30 can be obviated.

For a user who makes observation without using the reticle, it is only necessary to provide a microscope lens barrel to which the reticle anti-rotation unit 30 is not mounted. On the other hand, for a user who makes observation using the reticle, such as the polarization observation, it is only necessary to provide the microscope lens barrel to which the reticle anti-rotation unit 30 is mounted.

In the microscope lens barrel having the Siedentoph-type interpupillary adjustment mechanism, when it is assembled, fine adjustment that the mounting portion 10 mounted with the eyepiece 12 is moved along a plane normal to the rotating center axis 7a is made in order to align the rotating center axis 7a of the holding tube 7 with the optical axis of the eyepiece 12. Unless the rotating center axis 7a of the holding tube 7 is aligned with the optical axis of the eyepiece 12, the center of an observation image viewed through the eyepiece 12 will be shifted when the holding tube 7 is moved, with the fixed center axis 2a as a center. That is, the adjustment mentioned above leads to obviating a situation that when the holding tube 7 is moved, with the fixed center axis 2a as a center, the center of the observation image viewed through the eyepiece 12 is shifted. However, when the mounting portion 10 is moved as described above, the distance between the fixed center axis 2a and the rotating center axis 7a is changed and thus this distance varies with the microscope lens barrel. In this case, the center axis 31b of the fixed member 31 (the annular portion 31a) and the center axis 32b of the rotary member 32 (the annular portion 32a) in the reticle anti-rotation unit 30 cease to be aligned with the fixed center axis 2a and the rotating center axis 7a, respectively, and the reticle anti-rotation unit 30 cannot be mounted to the microscope lens barrel. Alternatively, there is the fear that trouble is caused to the operation of the reticle anti-rotation unit 30.

The reticle anti-rotation unit 30 of another embodiment mentioned above thus has the structure that accommodates variations in the distance between the fixed center axis 2a and the rotating center axis 7a. Provision is made here for moving the rotary member 32, for example, by about 1 mm with respect to the case member 34 so that the rotary member 32 can be moved along a plane normal to the center axis 32b. A tension imparting means imparting a tension to the connecting member 33 so that the rotary member 32 is brought close to the fixed member 31.

The tension imparting means, as shown in Fig. 14, is provided between the fixed member 31 and the rotary member 32 and in the proximity of the connecting member 33, and has an eccentric cam 41 and an elastic body 42. The eccentric cam 41 is configured into a cylindrical shape and is supported by a stepped screw 43 engaged with the case member 34 so that its eccentric position is used as a rotating axis. The stepped screw 43 constitutes a rotating axis parallel to the center axes 31b and 32b. Specifically, the eccentric cam 41 is rotated about the stepped screw 43, and thereby its peripheral wall is moved close to or away from the connecting member 33. The elastic body 42 includes, for example, a compression spring and is incorporated in a spring case 44 fixed to the case member 34. The elastic body 42 abuts on the peripheral wall of the eccentric cam 41 and at the same time, presses the eccentric cam 41 toward the connecting member 33. In the case member 34, a supporting part 45 pressing the connecting member 33 is fixed at a position opposite to the eccentric cam 41. This supporting part 45 is provided for the purpose of pressing inward and locating the connecting member 33 to thereby suppress an outward tension of the connecting member 33 so that the compact design of the whole of the reticle anti-rotation unit 30 is achieved.

According to the tension imparting means, the tension is imparted to the connecting member 33 by the eccentric cam 41 pressed with an elastic force due to the elastic body 42. Thus, an elastic biasing force is imparted, toward the fixed member 31, to the rotary member 32 provided to be movable with respect to the case member 34. As a consequence of this, the distance between the center axis 31 b of the fixed member 31 (the annular portion 31 a) and the center axis 32b of the rotary member 32 (the annular portion 32a) in the reticle anti-rotation unit 30 can be fine-adjusted, and therefore, even when the distance between the fixed center axis 2a and the rotating center axis 7a varies with the microscope lens barrel, the distance between the center axis 31b and the center axis 32b in the reticle anti-rotation unit 30 can be made to coincide with the distance between the fixed center axis 2a and the rotating center axis 7a. In this way, it becomes possible to mount the reticle anti-rotation unit 30 to the microscope lens barrel without causing any trouble to the operation of the reticle anti-rotation unit 30. Also, as the tension imparting means, for example, the connecting member 33 may be constructed with an elastic body such as a rubber belt, not to speak of the above structure. In the case where the connecting member 33 is constructed with the rubber belt, the eccentric cam 41 and the elastic body 42 become unnecessary.

Also, in another embodiment mentioned above, the connecting member 33 is not limited to the structure in the endless manner that it is wound around the first peripheral wall portion 31d of the fixed member 31 and the second peripheral wall portion 32f of the rotary member 32. For example, although not shown in figures, engaging wheels are mounted to the first peripheral wall portion 31d and the second peripheral wall portion 32f and a connecting member is provided as a wheel meshing with the engaging wheels, thereby equalizing the angles of rotations of the holding tube 7 and the rotary member 32.

Also, although, in all the embodiments described above, reference has been made to the structure that each of the reticle anti-rotation units 20 and 30 is mounted with respect to the holding tube 7 on the right side, it is also possible that each of the reticle anti-rotation units 20 and 30 is symmetrically constructed and thereby is mounted with respect to the holding tube 6 on the left side. In this case, it is general practice to provide the holding tube 6 on the left side with the mounting portion 10 and the adapter 11 and to mount the eyepiece 8 on the left side with the reticle plate (not shown).

## Claims

1. A microscope lens barrel comprising:
a lens barrel section in which a fixed tube is fixed to a lens barrel body, at least one of two holding tubes arranged parallel to and equidistant from a center axis of the fixed tube is provided to be movable without changing a distance from the center axis, and an optical system is placed to maintain directions of optical axes so that two optical paths split by transmitting and reflecting an optical path rendered incident in alignment with the center axis of the fixed tube are always aligned with center axes of the holding tubes; and
a reticle anti-rotation unit in which a reticle plate is placed on the center axis of the movable holding tube so that a plane on which a reticle is provided is perpendicular to the center axis and which is removably mounted to the fixed tube and the movable holding tube in a state where a holding mechanism holding a direction of the reticle plate on the center axis to the microscope body is integrated when the holding tube is moved.

2. A microscope lens barrel according to claim 1, **characterized in that** the reticle anti-rotation unit has a first axis provided to the fixed tube and fixed, parallel to the center axis of the fixed tube and at a preset distance therefrom; a rotary member placed on the movable holding tube so as to rotate around the center axis of the movable holding tube while retaining the reticle plate; a second axis provided to the rotary member and placed parallel to the center axis of the movable holding tube and at a preset distance therefrom; and a lever-like connecting member connecting the first axis with the second axis to constitute a parallel link connecting the first axis, the second axis, the center axis of the fixed tube, and the center axis of the movable holding tube.

3. A microscope lens barrel according to claim 1, **characterized in that** the reticle anti-rotation unit has a first peripheral wall portion fixed to the fixed tube along a circle of a preset radius with the center axis of the fixed tube as a center; a rotary member placed on the movable holding tube so as to rotate around the center axis of the movable holding tube while retaining the reticle plate; a second peripheral wall portion provided on the rotary member and placed along the circle of the preset radius, with the center axis of the movable holding tube as a center; and a connecting member connecting the first peripheral wall portion with the second peripheral wall portion.

4. A microscope lens barrel according to claim 1, **characterized in that** the reticle anti-rotation unit has a first peripheral wall portion fixed to the fixed tube along a circle of a preset radius, with the center axis of the fixed tube as a center; a rotary member provided to be movable along a plane perpendicular to the center axis of the movable holding tube while retaining the reticle plate and removably mounted to a mounting portion placed in the movable holding tube so as to rotate around the center axis of the movable holding tube; a second peripheral wall portion provided on the rotary member and placed along the circle of the preset radius, with the center axis of the movable holding tube as a center; an endless connecting member wound around the first peripheral wall portion and the second peripheral wall portion; and a tension imparting means imparting a tension to the connecting member.

5. A microscope lens barrel according to any one of claims 2-4, **characterized in that** the lens barrel section has a mounting portion placed to be rotatable around the center axis of the movable holding tube so that the rotary member is removably provided, and is provided with an adapter mounted to the mounting portion in a state where the reticle anti-rotation unit is removed, and retaining one eyepiece on the center axis of the movable holding tube, thereby adjusting a position of one eyepiece in an axial direction with respect to a position, in the axial direction, of a remaining eyepiece retained on the optical axis of a remaining optical path being split.
